(19) Europäisches Patentamt
European Patent Office
Office européen des brevets

(11) Publication number: 0 030 314 A1

# (12) EUROPEAN PATENT APPLICATION

(21) Application number: 80107326.3

(22) Date of filing: 25.11.80

(51) Int. Cl.³: **C 09 B 29/28**, C 09 B 43/18 // D06P1/18

(30) Priority: 27.11.79 IT 2757579

(43) Date of publication of application: 17.06.81 Bulletin 81/24

(84) Designated Contracting States: BE CH DE FR GB LI NL

(71) Applicant: AZIENDE COLORI NAZIONALI AFFINI ACNA S.P.A., 1/2, Largo Guido Donegani, Milan (IT)

(72) Inventor: De Feo, Francesco, 19, Via Rapisardi, Milan (IT)
Inventor: Cipolli, Roberto, 66, Via Cesare Correnti, Seregno (Milan) (IT)
Inventor: Marinelli, Gian Piero, Dr.-Chem., 14, Via Ugoni, Milan (IT)
Inventor: Mazzocchi, Angelo, 3, Via 1 Maggio, San Fermo della Battaglia (Como) (IT)
Inventor: Verdi, Roberto, Dr.-Chem., 11, Via alle Fornaci, Cogliate (Milan) (IT)
Inventor: Tumminello, Frederico, 13, p. le Maciachini, Milan (IT)

(74) Representative: Schmied-Kowarzik, Volker, Dr.
Patentanwälte Dr. V. Schmied-Kowarzik et al, Dipl.-Ing. G. Dannenberg Dr. P. Weinhold, Dr. D. Gudel Dipl.-Ing. S. Schubert Siegfriedstrasse 8, D-8000 München (DE)

## (54) Water-insoluble monoazo dyestuffs, their preparation and use in dyeing and printing synthetic polymeric materials.

(57) Water-insoluble monoazo dyes suitable for dyeing and printing man-made fibres and having the general formula:

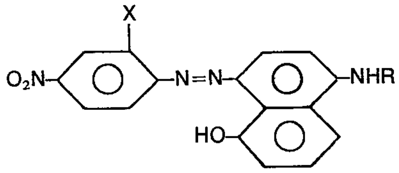

wherein:

X = H; Cl; Br; an alkyl $C_1$–$C_4$, an alkoxyl $C_1$–$C_4$; CN; $CF_3$; COO alkyl $C_1$–$C_4$;

R = an alkyl $C_1$–$C_8$ optionally substituted; a cycloalkyl $C_5$–$C_7$ optionally substituted; an aralkyl $C_1$–$C_2$ optionally substituted; an alkenyl $C_3$–$C_6$ optionally substituted.

The optional substituents may be: halogen; CN; OCO alkyl $C_1$–$C_8$; OCO aryl; OCON (alkyl $C_1$–$C_4$)$_2$; OCOO alkyl $C_1$–$C_8$; OCONH alkyl $C_1$–$C_4$.

EP 0 030 314 A1

ACTORUM AG

This invention relates to a new series of water-insoluble monoazo dyes free from hydrosolubilizing groups, to the synthesis for preparing same, to their application on textile materials and to the preparation of the corresponding intermediates.

More in particular the present invention relates to the synthesis of new monoazo dyes having the following general formula:

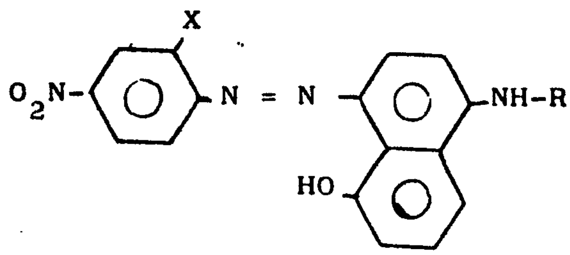

( I)

wherein:

X = H; Cl; Br; an alkyl $C_1$-$C_4$; an alkoxyl $C_1$-$C_4$; CN; $CF_3$; a COO alkyl $C_1$-$C_4$;

R = an alkyl $C_1$-$C_8$ optionally substituted,
a cycloalkyl $C_5$-$C_7$ optionally substituted;
an aralkyl $C_1$-$C_2$ optionally substituted;
an alkenyl $C_3$-$C_6$ optionally substituted.

The most suitable groups by which R can be optionally substituted are: halogen; CN; OCO alkyl $C_1$-$C_8$; OCO aryl; OCON (alkyl $C_1$-$C_4)_2$; OCOO alkyl $C_1$-$C_8$; $OCOHNR_1$ where:

$R_1$ = an alkyl $C_1$-$C_4$; a halogen alkyl $C_1$-$C_4$; an aryl optionally substituted by one or more atoms of halogen, alkyl $C_1$-$C_4$, alkoxyl $C_1$-$C_4$.

...

The dyes of general formula (I) are prepared according to known techniques, by diazotizing in an acid medium an amine of general formula:

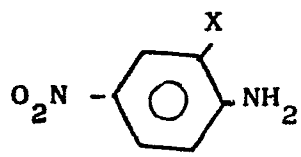

(II)

and copulating, in an acid aqueous medium, the diazo so obtained with the coupling compound of general formula:

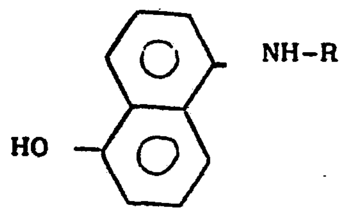

(III)

wherein:

X and R have the meaning specified hereinbefore.

The new intermediates of general formula (III) are obtained according to known techniques; more in particular in the case in which R is an alkyl $C_2$-$C_8$ substituted by OCO alkyl $C_1$-$C_8$, OCO aryl, OCON (alkyl $C_1$-$C_4$)$_2$, OCOO alkyl $C_1$-$C_8$ and OCOHNR$_1$ - where $R_1$ have the same meaning as specified hereinbefore - they are obtained by condensing the intermediates of formula:

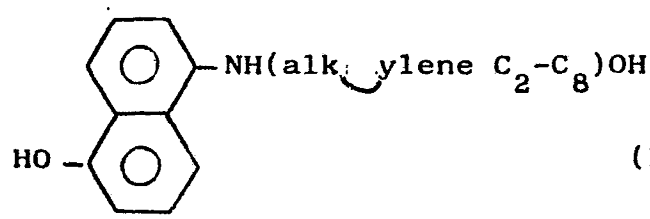

(IV)

with proper acylating agents, such as, for example:

...

$R_3COCl$ (V) $(R_4CO)_2O$ (VI) $R_5-N=C=O$ (VII)

$(R_6)_2NCOCl$ (VIII) $R_7OOC-Cl$ (IX)

wherein:

$R_3$ is an alkyl $C_1-C_8$ optionally substituted by halogen or alkoxyl $C_1-C_4$; an aryl optionally substituted by halogen, alkyl $C_1-C_4$ or alkoxyl $C_1-C_4$;

$R_4$ is an alkyl $C_1-C_8$; an aryl optionally substituted by halogen, alkyl $C_1-C_4$ or alkoxyl $C_1-C_4$;

$R_5$ is an alkyl $C_1-C_4$; a halogen alkyl $C_1-C_4$; an aryl optionally substituted by halogen, alkyl $C_1-C_4$ or alkoxyl $C_1-C_4$;

$R_6$ is an alkyl $C_1-C_4$;

$R_7$ is an alkyl $C_1-C_8$.

An alternative method for obtaining the dyes of general formula (I) in which: R is an alkyl $C_2-C_8$ substituted by OCO alkyl $C_1-C_8$; a OCO aryl; a OCON (alkyl $C_1-C_4)_2$ and a OCO $NHR_1$ - where $R_1$ has the meaning specified hereinbefore - may be, for example, the condensation of the dyes of general formula:

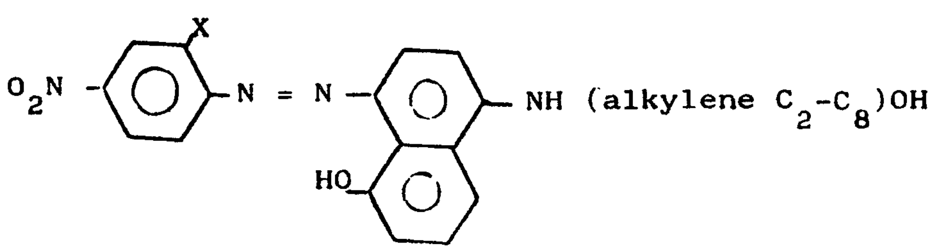

(X)

where:

...

X has the meaning previously specified, with the acylating agents having any of the general formulas from (V) to (IX).

The reaction between the intermediates of general formula (IV) or (X) and the reagents having any of the general formulas from (V) to (IX) are usually conducted in the presence of inert organic solvents such as, for example, benzene, toluene, xylene, chlorobenzene, orthodichlorobenzene, pyridine, dimethylformamide and dimethylsulphoxide, at temperatures ranging from 0° to 140°C either in the presence or in the absence of acceptors of acids or of basic catalysts such as e.g. pyridine or triethylamine.

As diazo components it is possible to profitably employ: 4-nitro aniline, 2-chloro-4-nitro-aniline, 2-bromo-4-nitro aniline, 2-cyano-nitro aniline, 2-trifluoromethyl-4-nitro aniline, 2-methoxy-4-nitro aniline, 2-amino-5-nitro benzoate of methyl.

Coupling compounds particularly suited to be employed in the present invention are: 5-n-butylamino-1-naphthol, 5-n-propyl-amino-1-naphthol, 5-n-pentylamino-1-naphthol, 5-n-hexylamino-1-naphthol, 5-n-heptylamino-1-naphthol, 5-(2-ethylhexylamino)-1-naphthol, 5-(2-acetoxyethylamino)-1-naphthol, 5-(2-benzoyloxyethylamino)-1-naphthol, 3-(5-hydroxynaphthyl-1-amino)propylester of N-butylcarbamic acid, ethyl-3-(5-hydroxynaphthyl-1-amino) propyl ester of carbonic acid, 2-(5-hydroxynaphthyl-1-amino) ethyl ester of N-phenylcarbamic acid, ethyl-2-(5-hydronaphthyl-1-amino)-ethyl ester of carbonic acid, 5-(2-pro

...

penylamino)-1-naphthol, 5-(2-chloroethylamino)-1-naphthol, 5-isobutylamino-1-naphthol, 5-isopropyl-amino-1-naphthol, 5-(5-hexenylamino)-1-naphthol, 2-(5-hydroxynaphthyl-1--amino)ethyl ester of N-(3,4-dichlorophenyl) carbamic acid, 3-(5-hydroxynaphthyl-1-amino)propyl ester of N-(3,4--dichlorophenyl) carbamic acid, 2-(5-hydroxynaphthyl-1--amino) ethyl ester of N-(2-chloroethyl) carbamic acid, 5-(3-butenylamino)-1-naphthol, methyl 2-(5-hydroxynaohthyl--1-amino) ethyl ester of carbonic acid, 5-(2-propyloxy ethylamino)-1-naphthol, 5-(2-pivaloylethylamino)-1-naphthol, 5-(5-hydronaphthyl-1-amino) ethyl ester of N,N-dimethylcarbamic acid, 5-(2-butoxy-ethylamino)-1-naphthol, 2-(5-hydroxynaphthyl-1-amino) ethyl ester of N-(4-chloro phenyl) carbamyl acid, 2-(5-hydroxynaphthyl-1-amino-ethyl ester of N-(4-methylphenyl) carbamic acid, 5-(3-acetoxy-propyl-amino)-1-naphthol, 5-(6-chlorohexylamino)-1-naph thol, 5-(2-caproyloxyethylamino)-1-naphthol, 5-(3-chloro propylamino)-1-naphthol, 5-(4-pentenylamino)-1-naphthol, 2-(5-hydroxynaphthyl-1-amino) ethyl ester of N-(4-methoxy phenyl)-carbamic acid, 5-i-pentyl-amino-1-naphthol, 5-2-hexylamino-1-naphthol, 5-(5-chloroisopentylamino-1--naphthol, (5-hydroxynaphthyl-1-amino)-capronitrile, 3-(5-hydroxynaphthyl-1-amino)-propionitrile, 5-(3-butenylamino)-1-naphthol.

Azo dyes are known having shades varying from reddish blue to greenish blue and structures similar to the one of the dyes of the present invention, which however have the drawback of being little stable to the pH variations during the dyeing, or of undergoing a degradation during said dyeing, or even of exhibiting low

....

0030314

values of fastness to light; such dyes are described for example in the following patents:

- German patents 659,147 and 658,124, in which 6-chloro- or 6-bromo-2.4-dinitroaniline are diazotized and copulated respectively on:

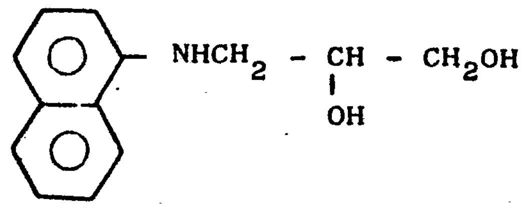 and

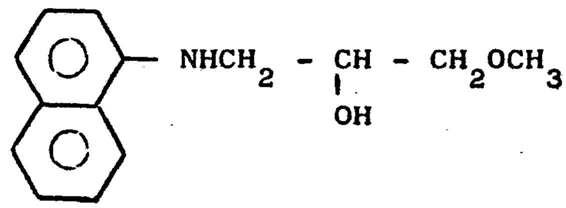

- U.S. patent 2,434,150 in which 2-alkylsulphonil-4-nitroanilines are diazotized and copulated on:

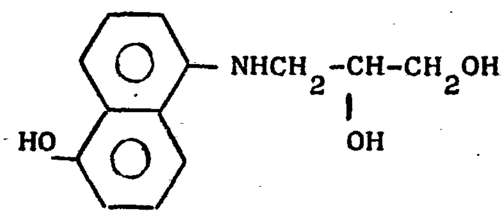

- German patent 639,727 in which 2-amino-benzothiazoles are diazotized and copulated on:

...

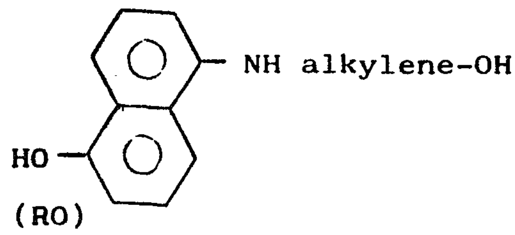

The Applicant has now surprisingly found that it is possible to obtain blue dyes corresponding to general formula (I) which exhibit, in respect of the known ones, improved general stabilities and in particular to light and sublimation.

Furthermore they exhibit a remarkable improvement of the dyeing properties, and in particular a high stability to the pH variations of the dyeing bath: practically no substantial differences of shade can be observed among the dyeings effected at pH values ranging from 4 to 7.

Generally the dyes of general formula (I) are obtained at a high purity degree, wherefore they do not require any purification.

The monoazo dyes of the present invention are particularly suited to dye and print synthetic polymeric materials such as, for example, polyesters, polyamides, polyacrylonitrile and the esters of cellulose in any form.

When applicated according to the usual dyeing methods, for example by means of an aqueous bath under pressure at 130°C, or by padding and steaming or by padding and heating with dry air (Thermosol), or according to the printing methods, they impart to these materials ...

bright and intense dyeings and printings varying from reddish blue to greenish blue, and exhibit a good affinity for, as well as a good stability to light, washing and sublimitation.

Due to the excellent stability to the pH variations of the dyeing bath, the monoazo dyes of general formula (I) are particularly suited to dye polyester at high temperature.

Similar applicative results and indentical possibilities of obtaining dyeings and printings varying from reddish blue to greenish blue are achieved by using mixtures of dyeings of general formula (I) either with one another, or with those described in Italian patent application No. 30,691 A/78 and having general formula:

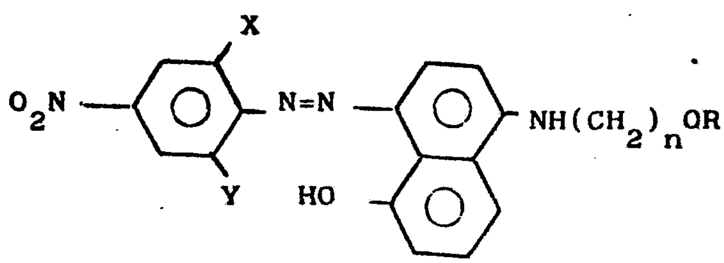

These mixtures are prepared according to various methods, for example during the preparation or finishing steps.

In the class of the monoazo dyes of general formula (I), the terms in which substituent R is an alkyl $C_4$-$C_8$ or an alkenyl $C_3$-$C_6$ are particularly interesting due to the higher affinity for the already mentioned man-made fibres.

...

For the applications mentioned hereinbefore the dyes, either individually or in admixture, in the dry state or in mass, are ground in the presence of proper dispersants such as, for instance, sodium ligninsulphonate, till obtaining particles of 0.5 - 1 μ, and are applicated onto the fibres according to the above-cited techniques.

The following examples are given to illustrate the characteristics of the present invention, without being however a limitation thereof.

Unless otherwise specified, the term "parts" is to be understood as expressed in weight units.

EXAMPLE 1

1.52 parts of 2-methyl-4-nitro-aniline were hot treated with 4.0 parts by volume of HCl, d = 1.18, and 30 parts by volume of water. The diazo solution was then clarified and poured, at 5-10°C, into a solution of 2.15 parts of 5-(n-butylamino)-1-naphthol in 4.0 parts by volume of HCl, d = 1.18, and 50 parts by volume of water. After stirring for 30 minutes it was filtered, the precipitate was washed with water and dried.

It was possible to obtain 3.6 parts of the dye:

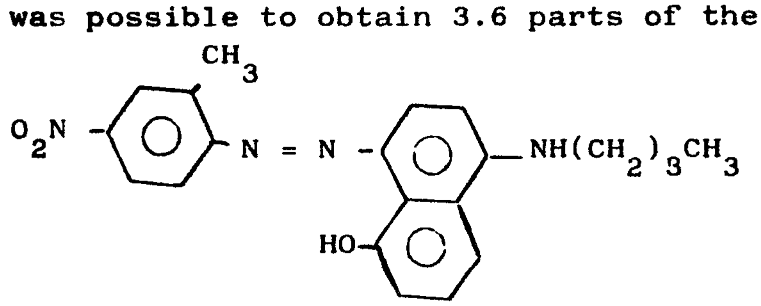

which imparted to the man-made fibres, in particular to the polyester fibres, an intense and bright reddish navy-blue shade, with good stabilities to light, to moisture

...

and to sublimation; also the stability of the dye to the variations of the dyeing pH from 4 to 7 proved to be excellent.

The coupling compound employed in the example described hereinabove was synthetized according to known methods.

By substituting 5-(n-butylamino)-1-naphthol by 5-benzylamino-1-naphthol a dye was obtained having a similar shade but a lower affinity for the above-mentioned fibres.

EXAMPLE 2

1.38 parts of p-nitro-aniline were dissolved in 4.0 parts by volume of HCl, d = 1.18, and 30 parts by volume of water.

It was diazotized at 5-10°C by pouring a solution of 0.69 parts of sodium nitrite into 10 parts by volume of water.

The diazo solution, once clarified, was poured at 5-10°C into a solution of 2.15 parts of the coupling compound of example 1 in 4.0 parts by volume of HCl, d = 1.18, and 50 parts by volume of water.

By operating according to the modalities of example 1, 3.4 parts of the dye:

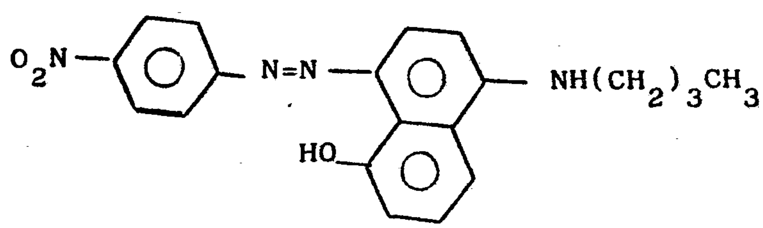

were recovered, which dyed the abovesaid fibres reddish navy-blue with good general stabilities and an excellent stability to pH.

...

EXAMPLE 3

2.17 parts of 2-bromo-4-nitro-aniline were diazotized and copulated on 2.29 parts of 5-(n-pentylamino)-1-naphthol according to the modalities specified in example 1.

4.1 parts of the dye:

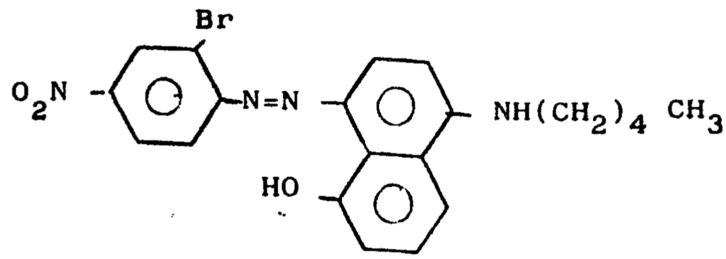

were obtained, which dyed the abovesaid fibres very greenish blue with good general stabilities and an excellent stability to pH.

EXAMPLE 4

1.73 parts of 2-chloro-4-nitro-aniline were diazotized and copulated on 2.29 parts of the coupling compound of example 3 according to the modalities described in example 3.

It was possible to obtain 3.9 parts of the dye:

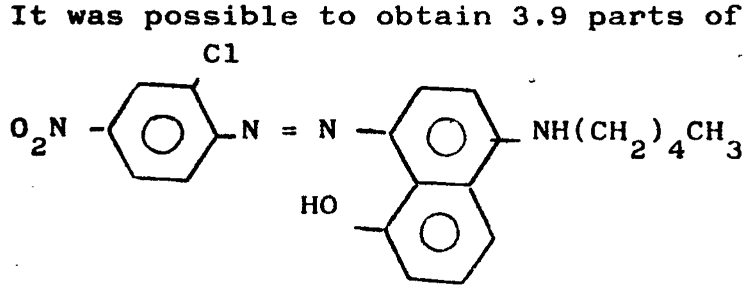

which imparted to the above-mentioned fibres a dark greenish blue shade of good general stabilities and an excellent stability to pH.

...

EXAMPLE 5

1.73 parts of 2-chloro-4-nitro-aniline diazotized according to the modalities specified in example 4 and copulated on 2.41 parts of 5-(cyclohexylamino)-1-naphthol in 4.0 parts by volume of HCl, d = 1.18, and 50 parts by volume of water.

By successively operating according to example 1, 3.9 parts of the dye:

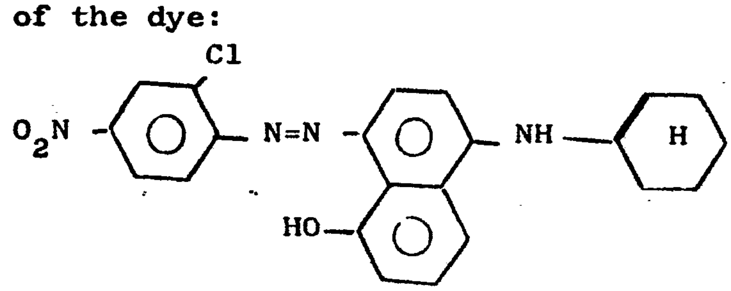

were obtained, which imparted to the abovesaid fibres a greenish navy-blue shade having good general stabilities and an excellent stability to pH.

The coupling compound was synthetized according to known techniques.

By substituting 5-(cyclohexylamino-1-naphthol by 5-(2--ethyl-hexylamino)-1-naphthol,a dye of similar shade, but endowed with a higher affinity for the above-mentioned fibres was obtained.

EXAMPLE 6

1.52 parts of 2-methyl-4-nitro aniline were diazotized and copulated on 2.71 parts of the coupling compound of example 5 according to the modalities illustrated in example 3.

4.1 parts of the dye:

...

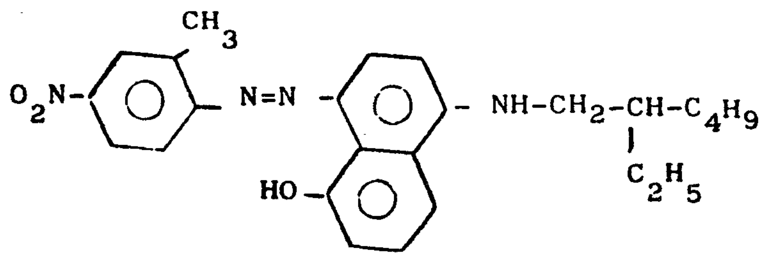

were obtained, which imparted to the above-mentioned fibres a reddish navy-blue shade having good general stabilities and an excellent stability to pH.

<u>EXAMPLE 7</u>

1.38 parts of 4-nitro-aniline were diazotized conforming to the modalities described in example 2 and were copulated on 2.55 parts of 5-(n-hexylamino)-1-naphthol, in 4.0 parts by volume of HCl, d= 1.18, and 40 parts by volume of water. By going on operating in like manner as described in example 1, 3.66 parts of the dye:

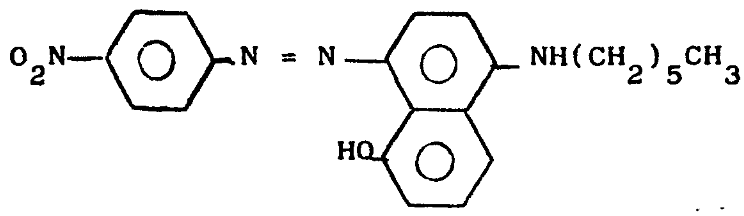

were obtained, which dyed the aforesaid fibres reddish navy-blue with good general stabilities and an excellent stability to pH.

The coupling compound was synthetized according to known methods.

<u>EXAMPLE 8</u>

2.06 parts of 2-trifluoromethyl-4-nitro-aniline were diazotized and copulated on 2.55 parts of the coupling

compound of example 7 according to the modalities specified in example 1.

4.5 parts of the dye:

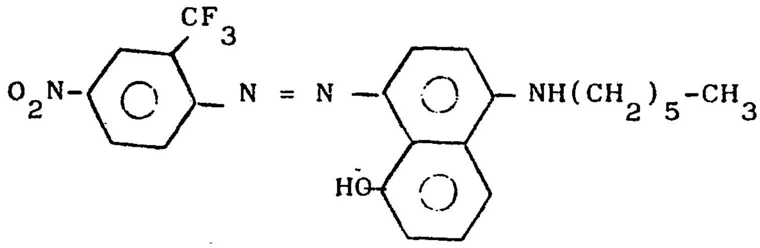

were obtained, which dyed the abovesaid fibres greenish blue with good general stabilities and an excellent stability to pH.

EXAMPLE 9

A solution of 1.63 parts of 2-cyano-4-nitro aniline in 20 parts by volume of acetic acid, 4 parts by volume of propionic acid and 2 parts by volume of water was cooled to 5-10°C, whereupon it was gradually added with 10 parts by volume of 1N nitrosylsulphuric acid. After stirring for 1 hour at 5-10°C, the diazo solution was gradually poured into a solution of 2.45 parts of 5-(2-acetoxyethylamino)-1-naphthol in 20 parts by volume of acetic acid and 40 parts by volume of water. It was then operated in like manner as described in example 6, so obtaining 3.9 parts of the dye:

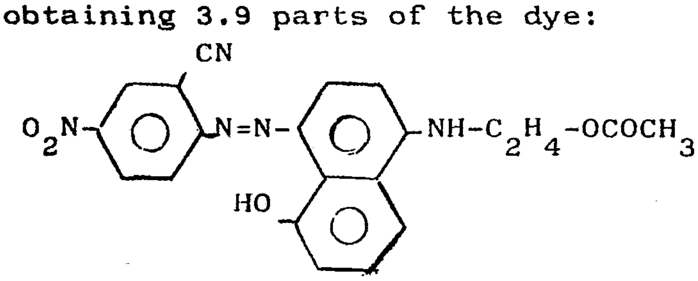

which dyes the abovesaid fibres green-blue with good

...

general stabilities and a good stability to pH.
The intermediate was synthetized by reacting 2.1 parts of 1-hydroxyethylamino-5-naphthol - prepared according to known techniques - with 2.7 parts by volume of the chloride of the acetic acid in 20 parts by volume of chlorobenzene, for about 3 hours at a temperature of 40-45°C. At the conclusion of condensation the mass was allowed to cool down to room temperature, whereupon the separated precipitate was filtered and washed with a few petroleum ether. After drying of the product, 2.3 parts of an intermediate having the following centesimal analysis:

| | C | H | N |
|---|---|---|---|
| theoretical % | 68.57 | 6.12 | 5.71 |
| found % | 67.74 | 5.98 | 5.47 |

were obtained.

EXAMPLE 10

A solution consisting of 1.96 parts of the methyl ester of the 2-amino-5-nitro-benzoic acid in 10 parts by volume of $H_2SO_4$, d = 1.84, and cooled to 0-5°C was additioned, in 1 hour, with a solution of 0.69 parts of sodium nitrite in 10 parts by volume of $H_2SO_4$ d = 1.84. After further stirring for 1 hour, the diazo solution was poured, at 5-10°C, into a solution of 2.03 parts of 1-hydroxy-ethylamino-5-naphthol in 4.0 parts by volume of HCl, d = 1.18 and 50 parts by volume of water.
It was then operated according to example 1, so obtaining 3.9 parts of the intermediate dye:

...

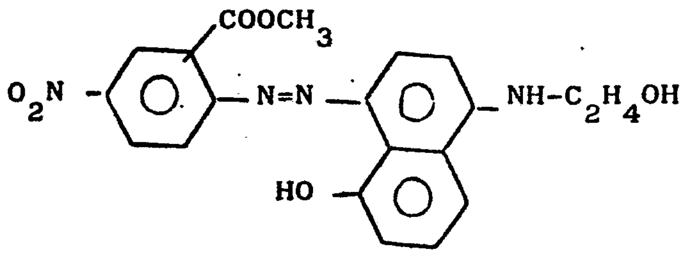

2.5 parts of this product were then reacted in 20 parts by volume of orthodichlorobenzene with 0.5 parts of phenyl-isocyanate at a temperature of 80°C for 4 hours. On conclusion of the reaction, the mass was allowed to cool down to room temperature, whereupon the precipitate was filtered and washed with petroleum ether.
By drying the cake it was possible to obtain 2.6 parts of the dye:

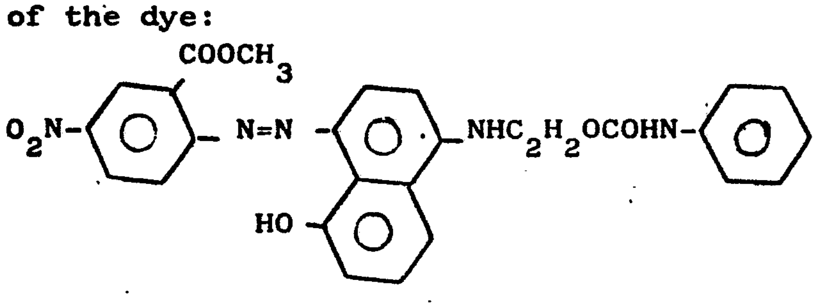

which dyes the above-mentioned fibres green-blue with good general stabilities and an excellent stability to pH.

EXAMPLE 11

1.52 parts of 2-methyl-4-nitro aniline were diazotized and copulated on 2.03 parts of 1-hydroxyethylamino-5--naphthol according to the modalities specified in example 1.

3.4 parts of the intermediate dye:

. . .

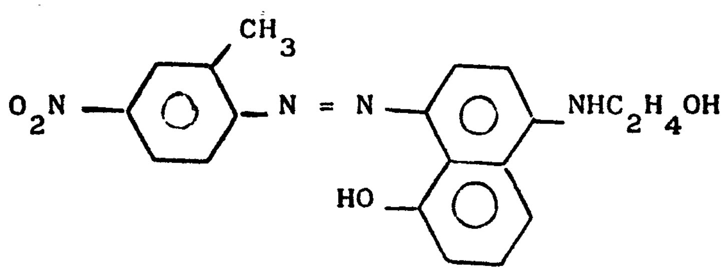

were obtained.

1.83 parts of such product were dissolved, at room temperature, in 20 parts by volume of dimethylformamide; the resulting solution was added with 0.6 parts of triethylamine and 0.75 parts of propionic anhydride, the mass was left under stirring, always at room temperature, for about 3 hours; on conclusion of the reaction the solution was poured, under stirring, into water and the resulting precipitate was separated by filtration and washed on the filter with water.

After drying of the cake, 2.1 parts of the dye:

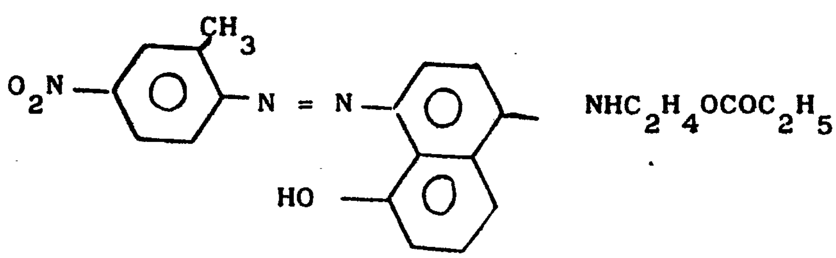

were obtained, which dyes the above-mentioned fibres reddish navy-blue with good general stabilities and an excellent stability to pH.

EXAMPLE 12

1.52 parts of 2-methyl-4-nitro-aniline were diazotized and copulated, according to the modalities of example 1, on 2.09 parts of the coupling compound:

...

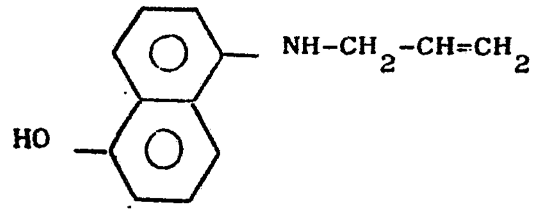

in 4.0 parts by volume of HCl, d = 1.18, and 40 parts by volume of water.

By operating then in like manner as described in example 1, 3.5 parts of the dye:

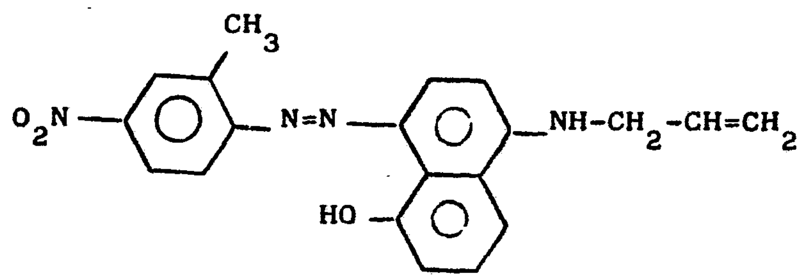

were obtained, which imparted to the abovesaid fibres a reddish navy-blue shade having good general stabilities and an excellent stability to pH.

The coupling compound was prepared according to conventional techniques.

EXAMPLE 13

1.83 parts of the intermediate azo dye of example 10 were dissolved in 20 parts by volume of pyridine; the solution was then cooled to 0°-5°C and additioned, in about 30 minutes, with 3 parts by volume of methyl chloroformate.

The mass was left under stirring at 0-5°C for about 10 hours, whereupon it was poured into water.

...

The product which separated was isolated by filtration and washed with water on the filter.

By drying the cake it was possible to obtain 2.1 parts of the dye:

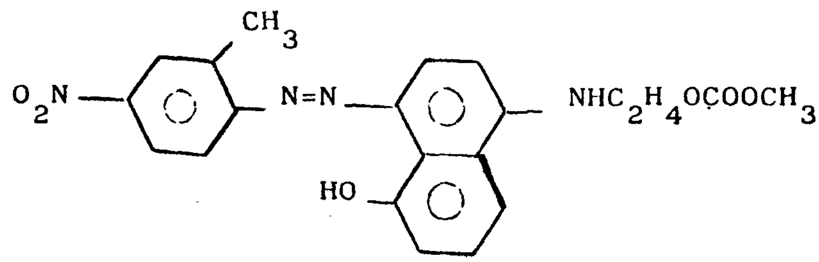

which imparted to the abovesaid fibres a reddish navy--blue shade having good general stabilities and an excellent stability to pH.

EXAMPLE 14

1.73 parts of 2-chloro-4-nitro aniline and 1.52 parts of 2-methyl-4-nitro aniline were diazotized according to the modalities specified in example 1 and copulated on 4.3 parts of the coupling compound of such example. 7.4 parts of the 50:50 mixture of the dyes:

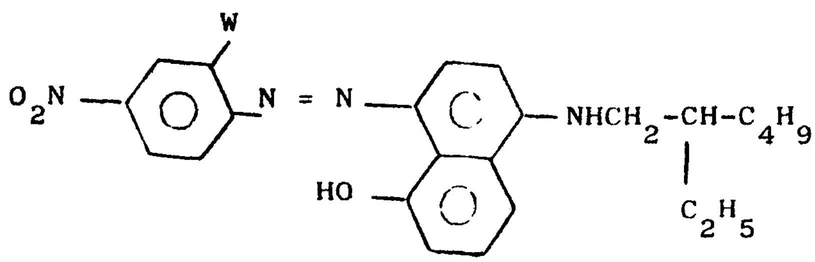

W=Cl, $CH_3$ 1:1

were obtained, which dyes the abovesaid fibres greenish navy-blue with good general stabilities and an excellent stability to pH.

EXAMPLE 15

3.04 parts of 2-methyl-4-nitro aniline were diazotized

...

and copulated, according to the modalities described in example 1, on a mixture of 2.15 parts of the coupling compound of example 1 and 2.31 parts of the coupling compound described in example 1 of Italian patent application No. 30,691 A/78 in 8.0 parts by volume of HCl, d = 1.18, and 100 parts by volume of water.

After filtration, washing of the precipitate with water and drying of the cake, 7.5 parts of the 50:50 mixture of the dyes:

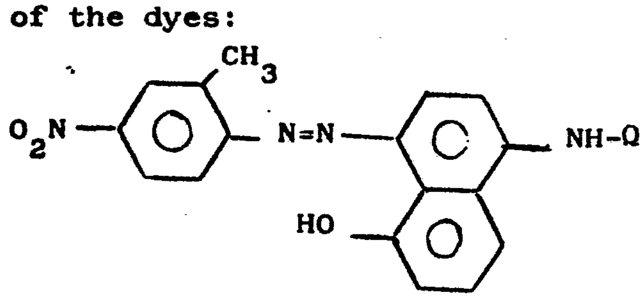

Q = $-CH_2CH_2CH_2OCH_3$

$-C_4H_9$

were obtained, which dyed the aforesaid fibres reddish navy-blue with good general stabilities and an excellent stability to pH.

EXAMPLE 16

0.6 parts of the dye of example 1, previously microfined, were added to a dyeing bath at 40°C containing 100 parts of a polyester yarn.

The pH-value was brought to 5 with acetic acid, whereupon, operating with a bath ratio of 1:15, the bath was gradually heated to 130-135°C and dyeing was carried out at such temperature for 1 hour.

It was cooled down, the bath was discharged and the dyed material was subjected to the usual alkaline reducing cleaning treatment.

...

An intense and bright reddish navy-blue dyeing having good stabilities to light, to moisture and to sublimation was obtained.

The dye exhibited an excellent stability to the variation of the dyeing pH from value 7 to value 4; the shade of the dyeing remained practically unchanged.

EXAMPLE 17

0.3 parts of the dye of example 1 and 0.3 parts of the dye of example 2 were microfined and applicated to 100 parts of a polyester yarn according to the operative modalities described in example 16. The dyeing obtained exhibited an intense and bright greenish navy-blue shade with good general stabilities and an excellent stability to the variation of the dyeing pH from value 7 to value 4.

By operating analogously with the preceding examples, the following monoazo dyes of general formula (I) were obtained:

| Example No. | X | R | Shade on polyester fibres |
|---|---|---|---|
| 19 | $CH_3$ | $n-C_3H_7$ | reddish navy-blue |
| 20 | $CH_3$ | $C_2H_4OCOHNC_2H_4Cl$ | reddish navy-blue |
| 21 | Br | $(CH_2)_2-CH=CH_2$ | greenish navy-blue |
| 22 | $CH_3O$ | $C_2H_4OCOC_6H_5$ | reddish navy-blue |
| 23 | Cl | $i-C_6H_{13}$ | greenish navy-blue |
| 24 | Cl | $n.C_5H_{10}CN$ | greenish blue |
| 25 | Cl | $C_2H_4OCOCH_3$ | greenish navy-blue |
| 26 | Cl<br>$CH_3$ | $n-C_6H_{13}$ | greenish navy-blue |
| 27 | Cl | $C_2H_4OCOOCH_3$ | greenish navy-blue |
| 28 | Cl | $i-C_7H_{15}$ | greenish navy-blue |

| Example No. | X | R | Shade on polyester fibres |
| --- | --- | --- | --- |
| 29 | Br | $C_2H_4OCOC(CH_3)_3$ | greenish navy-blue. |
| 30 | Cl } 1:1<br>H } | $CH_2CH(C_2H_5)C_4H_9$ | greenish navy-blue |
| 31 | $CH_3$ | $n-C_4H_9$ 1:1<br>$CH_2CH(C_2H_5)C_4H_9$ | greenish navy-blue |
| 32 | $COOC_2H_5$ | $C_4H_8OCOC_3H_7$ | greenish blue |
| 33 | $C_2H_5O$ | $C_2H_4OCOHN-C_6H_5$ | reddish navy-blue |
| 34 | H | $CH_2CH(C_2H_5)C_4H_9$ | reddish navy-blue |
| 35 | Cl | $C_3H_6OCOHNC_4H_9$ | greenish navy-blue |
| 36 | $CH_3$ | $C_4H_8OCOC_2H_5$ | reddish navy-blue |
| 37 | CN | $nC_5H_{10}Cl$ | greenish blue |
| 38 | $CH_3O$ | $C_2H_4OCON(CH_3)_2$ | reddish navy-blue |
| 39 | Br | $C_2H_4OCOOC_4H_9$ | greenish navy-blue |
| 40 | Cl | $(CH_2)_4-CH=CH_2$ | greenish navy-blue |
| 41 | Br | $C_2H_4OCOHN-4C_6H_4Cl$ | greenish blue |
| 42 | H | $C_5H_{10}OCOHN-3,4-$<br>$-C_6H_3Cl_2$ | |
| 43 | Cl | $C_2H_4OCOC_3H_7$ | greenish blue |
| 44 | $CH_3$ | $C_2H_4OCOHN-4C_6H_4CH_3$ | reddish navy-blue |
| 45 | Cl | $i-C_5H_{11}$ | greenish navy-blue |
| 46 | $COOC_4H_9$ | $CH_2CH(C_2H_5)C_4H_9$ | greenish blue |
| 47 | $C_2H_5O$ | $C_3H_6OCOCH_3$ | reddish navy-blue |
| 48 | Cl | $n-C_6H_{12}Cl$ | greenish navy-blue |
| 49 | $CH_3$ | $C_2H_4OCOC_5H_{11}$ | reddish navy-blue |

...

| Example No. | X | R | Shade on polyester fibres |
|---|---|---|---|
| 50 | Br | $CH_2CH(C_2H_5)C_4H_9$ | greenish navy-blue |
| 51 | $CH_3$ | $i\text{-}C_6H_{13}$ | reddish navy-blue |
| 52 | $COOC_2H_5$ | $i\text{-}C_4H_9$ | greenish blue |
| 53 | $CH_3$ | $C_2H_4OCO\ CH(C_2H_5)\text{-}C_4H_9$ | reddish navy-blue |
| 54 | H | $C_2H_4OCOHN\text{-}4C_6H_4OCH_3$ | reddish navy-blue |
| 55 | Cl | $(CH_2)_3\text{-}CH{=}CH_2$ | greenish navy-blue |
| 56 | $CH_3O$ | $C_2H_4CN$ | reddish navy-blue |
| 57 | CN | $n\text{-}C_3H_6Cl$ | greenish blue |
| 58 | Cl | $C_2H_4Cl$ | greenish navy-blue |
| 59 | Br | $i\text{-}C_3H_7$ | greenish navy-blue |
| 60 | $CH_3$ | $n\text{-}C_7H_{14}OCOCH_3$ | reddish navy-blue |
| 61 | $C_3H_7O$ | $CH_2\text{-}CH{=}CH_2$ | reddish navy-blue |

In the above mentioned residues alkyl $C_1$-$C_4$ (also in more complex residues like alkoxyl or halogen substituted alkyl etc.) is e.g. methyl, ethyl, propyl, i-propyl, butyl, i-butyl, sec.-butyl or tert.-butyl;

In case of alkyl $C_1$- $C_8$ also residues like n-pentyl, i-pentyl, hexyl, heptyl, i-heptyl, octyl or 2-ethyl-hexyl are included;

Cycloalkyl is especially cyclopentyl, cyclohexyl, cycloheptyl;

halogen is especially Cl and Br;

aralkyl is especially benzyl, phenethyl;

alkenyl is especially allyl, propenyl, butenyl, pentenyl or hexenyl;

aryl is preferably phenyl.

CLAIMS

1) Monoazo dyes of general formula (I):

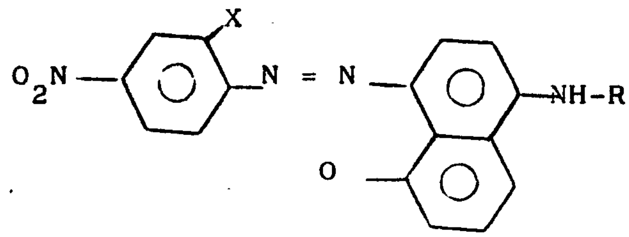

(I)

wherein:

X = H; Cl; Br; an alkyl $C_1-C_4$; an alkoxyl $C_1-C_4$; CN; $CF_3$; COO alkyl $C_1-C_4$;

R = an alkyl $C_1-C_8$ optionally substituted; a cycloalkyl $C_5-C_7$ optionally substituted; an aralkyl $C_1-C_2$ optionally substituted; an alkenyl $C_3-C_6$ optionally substituted;

the most suitable group by which R may be optionally substituted being; halogen; CN; OCO alkyl $C_1-C_8$; OCO aryl, OCON(alkyl $C_1-C_4)_2$; OCOO alkyl $C_1-C_8$; OCOHN-$R_1$ wherein: $R_1$ = an alkyl $C_1-C_4$; a halogen alkyl $C_1-C_4$; an aryl optionally substituted by one or more atoms of halogen, alkyl $C_1-C_4$, alkoxyl $C_1-C_4$.

2) Monoazo dyes of general formula (I), in which substituent R is preferably an alkyl $C_4-C_8$ or an alkenyl $C_3-C_6$.

3) A process for preparing the monoazo dyes of general formula (I) characterized in that the diazonium salt of an amine of general formula:

...

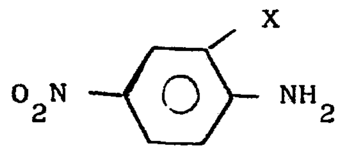

(II)

is copulated on the coupling compounds of general formula:

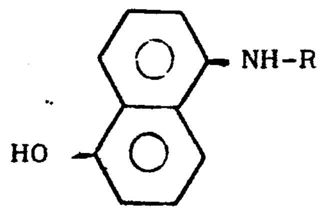

(III)

in an acid aqueous medium, where X and R have the meaning specified in claim 1.

4) A process for preparing the monoazo dyes of general formula (I) according to claim 3, characterized in that - if R is an alkyl $C_2$-$C_8$ substituted by OCO alkyl $C_1$-$C_8$; OCO aryl; OCON (alkyl $C_1$-$C_4$)$_2$; OCOO alkyl $C_1$-$C_8$; OCOHN $R_1$, where $R_1$ is an alkyl $C_1$-$C_4$; a halogen alkyl $C_1$-$C_4$; an aryl optionally substituted by one or more atoms of halogen, alkyl $C_1$-$C_4$, alkoxyl $C_1$-$C_4$ - the dyes of general formula:

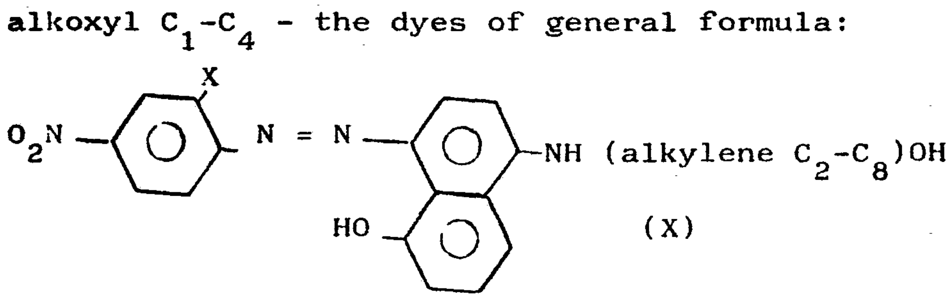

(X)

are condensed with the corresponding reagents of general formula:

...

| | | |
|---|---|---|
| $R_3COCl$ | $(R_4CO)_2O$ | $R_5-N=C=O$ |
| (V) | (VI) | (VII) |

| | |
|---|---|
| $(R_6)_2NCOCl$ | $R_7OOC-Cl$ |
| (VIII) | (IX) |

where: X and R have the meaning specified in claim 1, and:

$R_3$ = an alkyl $C_1-C_8$ optionally substituted by halogen or alkoxyl $C_1-C_4$; an aryl optionally substituted by halogen, alkyl $C_1-C_4$ or alkoxyl $C_1-C_4$;

$R_4$ = an alkyl $C_1-C_8$; an aryl optionally substituted by halogen, alkyl $C_1-C_4$ or alkoxyl $C_1-C_4$;

$R_5$ = an alkyl $C_1-C_4$; a halogen alkyl $C_1-C_4$; an aryl optionally substituted by halogen; an alkyl $C_1-C_4$ or an alkoxyl $C_1-C_4$;

$R_6$ = an alkyl $C_1-C_4$;

$R_7$ = an alkyl $C_1-C_8$;

in the presence of organic solvents such as, for example, benzene, toluene, xylene, chlorobenzene, orthodichlorobenzene, pyridine, dimethylformamide and dimethylsulphoxide, at temperatures ranging from 0 to 110°C, either in the presence of in the absence of acid acceptors or of basic catalysts such as, for instance, pyridine or triethylamine.

5) Synthetic polymeric materials dyed or printed with the dyes of claim 1.

European Patent Office

# EUROPEAN SEARCH REPORT

0030314

Application number
EP 80 10 7326

| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | |
| X | US - A - 2 173 055 (HITCH, KVALES)<br>* Page 1, examples 1,2; page 2, examples 3,7,8 *<br>-- | 1,3,5 | C 09 B 29/28<br>43/18//<br>D 06 P 1/18 |
| X | US - A - 2 359 305 (DICKEY, MCNALLY)<br>* Page 4, examples 11,15 *<br>-- | 1,3,5 | |
| X | US - A - 2 386 599 (DICKEY, MCNALLY)<br>* Page 4, table, example 23; page 5, table, examples 5,6,9 *<br>-- | 1,3,5 | TECHNICAL FIELDS SEARCHED (Int. Cl.3) |
| X | US - A - 2 397 927 (DICKEY, MCNALLY)<br>* Page 6, claim 4 *<br>-- | 1,3,5 | C 09 B 29/28<br>29/24<br>43/18-<br>43/22 |
| X | US - A - 2 768 160 (DICKEY, TOWNE)<br>* Column 10, table, last example *<br>-- | 1,3,5 | |
| X | US - A - 2 375 804 (DICKEY, MCNALLY)<br>* Pages 1,2; examples 1,2 *<br>-- | 1,3,5 | CATEGORY OF CITED DOCUMENTS |
| | US - A - 2 373 700 (MCNALLY, DICKEY)<br>* Page 4, example 17; page 5, table, example 17 *<br>-- | 1,3,5 | X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| | FR - A - 785 958 (SOCIETY POUR L' INDUSTRIE CHIMIQUE A BALE)<br>* Page 1, lines 1-18; page 2, ./. | 1-3,5 | |
| X | The present search report has been drawn up for all claims | | &: member of the same patent family, corresponding document |

| Place of search | Date of completion of the search | Examiner |
|---|---|---|
| The Hague | 03-03-1981 | GREEN |

EPO Form 1503.1 06.78

European Patent Office

# EUROPEAN SEARCH REPORT

0030314

Application number

EP 80 10 7326

-2-

| Category | Citation of document with indication, where appropriate, of relevant passages | Relevant to claim | CLASSIFICATION OF THE APPLICATION (Int. Cl. 3) |
|---|---|---|---|
| | lines 84,85 * | | |
| | -- | | |
| A | FR - A - 2 257 652 (SANDOZ) * Page 1, formula I * | 1,3,5 | |
| | -- | | |
| P,X | FR - A - 2 444 065 (ACNA) * Page 1, lines 1-35; pages 4-7; examples 1-5; pages 8,9; examples 8,9; page 10, example 12; page 11, examples 16-19, 25 * | 1,3,5 | TECHNICAL FIELDS SEARCHED (Int. Cl. 3) |
| D | & IT - A - 30691A/78 | | |
| | ---- | | |

EPO Form 1503.2 06.78